# EUROPEAN PATENT SPECIFICATION

(11) **EP 0 571 638 B1**
(45) Date of publication and mention of the grant of the patent: **11.09.2002**
(21) Application number: 93900391.9
(22) Date of filing: 17.12.1992
(51) Int. Cl.: G09G 5/00, H04S 7/00

(54) **ACOUSTIC EQUIPMENT AND METHOD OF DISPLAYING OPERATING THEREOF**
AKUSTISCHE VORRICHTUNG UND BETRIEBSANZEIGEVERFAHREN DAFUER
MATERIEL ACOUSTIQUE ET PROCEDE DE VISUALISATION DE SON FONCTIONNEMENT

(30) Priority: 17.12.1991 JP 33366891; 18.12.1991 JP 33514791; 19.12.1991 JP 33723191; 19.12.1991 JP 33721591; 19.12.1991 JP 33695091; 20.12.1991 JP 33871491
(43) Date of publication of application: 01.12.1993
(60) Divisional application: 00113886.6
(73) Proprietor: SONY CORPORATION, Tokyo 141 (JP)
(72) Inventor: FUJISHITA, Kaneaki, Shinagawa-ku, Tokyo 141 (JP); SAKURAI, Osamu, Shinagawa-ku, Tokyo 141 (JP); NAGAHARA, Junichi, Shinagawa-ku, Tokyo 141 (JP)
(74) Representative: Ayers, Martyn Lewis Stanley
(86) International application number: JP9201645
(87) International publication number: WO93012517

(56) References cited:
- EP-A- 0 276 948
- EP-A- 0 367 569
- EP-A- 0 390 041
- EP-A- 0 391 657
- JP-A- 2 266 418
- JP-A- 51 123 017
- JP-A- 60 085 688
- JP-A- 64 018 745
- JP-U- 60 111 173
- US-A- 4 937 875
- US-A- 5 040 220
- PATENT ABSTRACTS OF JAPAN vol. 15, no. 460 (P-1278), 21 November 1991 & JP 03 194599 A (FUJITA), 26 August 1991

## Description

### Technical Field:

The present invention relates to an audio equipment capable of processing video signals and a method of displaying operation of the acoustic equipment.

### Background Art :

It has been practiced to supply audio signals reproduced from a VTR to an audio equipment to improve reproduced acoustic sounds. It is also customary to supply, simultaneously with the audio signals, video signals from the VTR to the audio equipment, from which the video signals are supplied to a video signal receiver or another VTR. When supplying video signals to another VTR for dubbing purpose or the like, the video signals may be amplified or otherwise processed in the audio equipment in a manner suitable for dubbing the video signals.

EP-A-0 276 948 describes a sound field control device capable of producing a sound field effect tone which has a tonal effect providing a listener with a feeling of presence and comprises a sound field effect tone generation circuit for generating a sound field effect tone on the basis of sound field information supplied from a source and a source signal. The sound field effect tone is sounded simultaneously with reproduction of the source signal and a reproduced sound field produced on the basis of the source signal is controlled by this sound field effect tone. In one aspect the sound field effect tone generation circuit comprises a convolution operation circuit which subjects a signal derived from left and right signals from the source signal to convolution operation with sound field data derived on the basis of the sound field information from the source signal.

Recent years have seen many various modes of signal processing in audio equipment. It is difficult to display necessary modes of signal processing sufficiently on a small-size display disposed on a control panel of audio equipment, for example.

The present invention has been made in view of the above problems.

### Disclosure of the Invention:

According to the present invention, there is provided a broadcast receiving apparatus for receiving a plurality of radio broadcast signals and for processing a received external video signal for output to and for display on an electronic display screen included in a video signal receiver comprising:
means for applying desired sound field setting to one of the plurality of radio broadcast signals; and
control means for enabling the user of the apparatus to modify the sound field setting information; wherein the broadcast receiving apparatus comprises:
   means for storing frequencies of radio broadcast signals that can selectively be received, index names associated with the respective radio broadcast signals, and sound field setting information corresponding respectively to the plurality of radio broadcast signals, wherein the plurality of radio broadcast signals is selectively receivable;
   means for producing an internal video signal for output to the video signal receiver for displaying collectively a list including the frequencies, the index names, and the sound field setting information stored in the means for storing on the electronic display screen included in the video signal receiver;
   control means for controlling the means for storing and the means for producing an internal video signal, wherein the control means includes a plurality of keys arranged so that a user can select one of the plurality of radio broadcast signals from the list displayed on the electronic display screen and includes means for enabling the user of the apparatus to modify the sound field setting information corresponding to the selected one of the plurality of radio broadcast signals by displaying on the electronic display screen a sound field setting window including a plurality of user selectable sound field settings so that the user can select, using the plurality of keys, a desired sound field setting for the selected one of the plurality of radio broadcast signals, and for storing the desired sound field setting in the means for storing; and wherein
   the means for applying the desired field setting is for applying the stored desired sound field setting to said one of the plurality of radio broadcast signals when said radio broadcast signal is selectively received.

According to the present invention, there is also provided a selecting method for use in a broadcast receiving apparatus for receiving a plurality of radio broadcast signals and for processing a received external video signal for output to and for display on an electronic display screen included in a video signal receiver, said broadcast receiving apparatus comprising means for storing frequencies of radio broadcast signals that can selectively be received, index names associated with the respective radio broadcast signals and sound field setting information corresponding respectively to the plurality of radio broadcast signals the method comprising the steps of:
applying a desired sound field setting to one of the plurality of radio broadcast signals; and
enabling the user of the apparatus to modify the sound field setting information: characterised by
producing an internal video signal for output to the video signal receiver for displaying collectively a list including the frequencies, the index names, and the sound field setting information stored in the means for storing on the electronic display screen included in the video signal receiver,
enabling the user to select one of the plurality of radio broadcast signals from the list displayed on the electronic display screen;
enabling the user of the apparatus to modify the sound field setting information corresponding to the selected one of the plurality of radio broadcast signals by displaying on the electronic display screen a sound field setting window including a plurality of user selectable sound field settings so that the user can select, using the plurality of keys, a desired sound field setting for the selected one of the plurality of radio broadcast signals;
storing the desired sound field setting to correspond to said selected one of said plurality of radio broadcast signals; and
applying the desired sound field setting to said one of the plurality of radio broadcast signals when said radio broadcast signal is selectively received.

### Brief Description of the Drawings:

FIG. 1 is a block diagram of an audio equipment according to the present invention;
FIG. 2 is a front elevational view of a control panel of the audio equipment;
FIGS. 3A and 3B are views illustrative of an example of operation display process;
FIG. 4 is a flowchart of the operation display process;
FIGS. 5A and 5B are views illustrative of another example of operation display process;
FIG. 6 is a flowchart of the operation display process;
FIGS. 7A and 7B are views illustrative of still another example of operation display process;
FIGS. 8A and 8B are views illustrative of yet another example of operation display process;
FIG. 9 is a flowchart of the operation display process;
FIGS. 10A and 10B are views illustrative of a further example of operation display process;
FIGS. 11A and 11B are views illustrative of a still further example of operation display process;
FIG. 12 is a flowchart of the operation display process;
FIGS. 13A and 13B are views illustrative of another example of operation display process;
FIGS. 14A and 14B are views illustrative of still another example of operation display process;
FIGS. 15A and 15B are diagrams showing a parameter of the size of a sound field;
FIG. 16 is a flowchart illustrative of the parameter of the size of a sound field;
FIGS. 17A and 17B are views illustrative of yet another example of operation display process;
FIGS. 18A and 18B are views illustrative of a further example of operation display process;
FIG. 19 is a diagram showing mixture ratios of colors that are displayed;
FIGS. 20A and 20B are diagrams showing a parameter of a wall surface material;
FIG. 21 is a flowchart illustrative of the parameter of a wall surface material;
FIGS. 22A and 22B are views illustrative of a still further example of operation display process; and
FIGS. 23A and 23B are views illustrative of a yet further example *of* operation display process.

### Best Mode for Carrying Out the Invention:

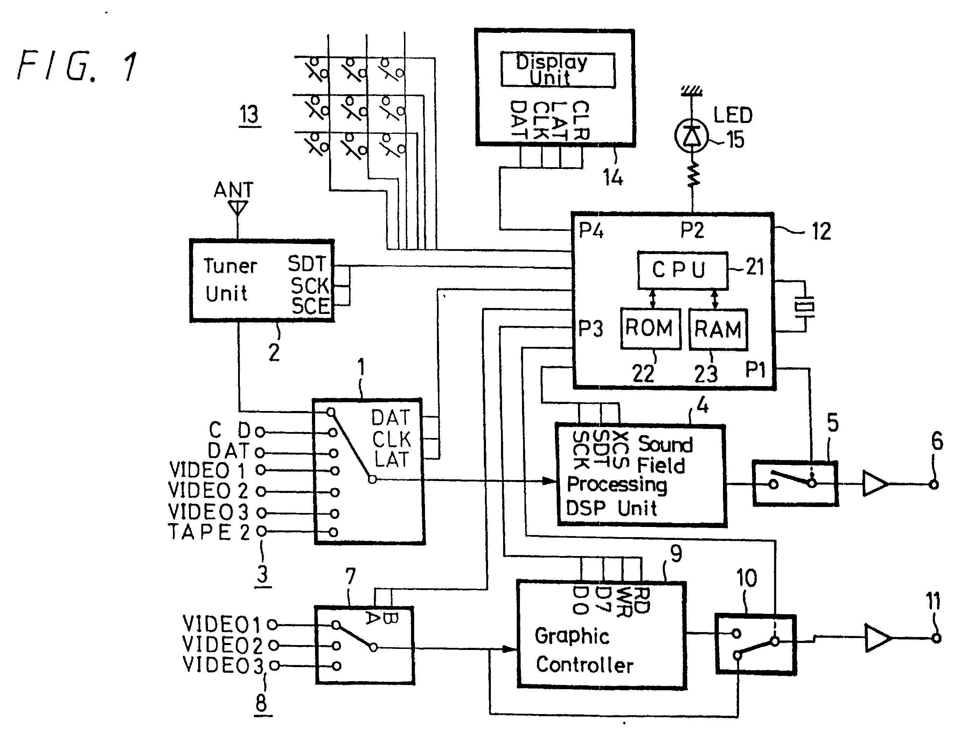

As shown in FIG. 1, an audio equipment according to the present invention has an audio signal input selector switch 1 that is supplied with a received AM/FM signal from a tuner unit 2, a reproduced signal from a CD player (not shown) connected to an input terminal 3, a reproduced signal from a DAT player (not shown) connected to an input terminal 3, audio signals from three video equipments VIDEO1, VIDEO2, VIDEO3 (not shown) connected to respective input terminals 3, and an audio signal monitored and reproduced from a recording equipment TAPE2 (not shown) connected to an input terminal 3 in a dubbing process, each of the signals being supplied in a stereophonic mode. One of the signals from the input selector switch 1 is supplied to a sound field processing DSP unit 4, which sends the processed signal through a muting switch 5 to an output terminal 6.

The audio equipment also has a video signal input selector switch 7 that is supplied with video signals reproduced from the respective three video equipments VIDEO1, VIDEO2, VIDEO3. The video signal input selector switch 7 supplies one of the video signals to a graphic controller (GDC) 9 which generates a video signal for a displayed image. One of the signal generated by the GDC 9 and the original signal is selected by a switch 10 and supplied to an output terminal 11.

The audio equipment further includes a system control microcomputer 12. The microcomputer 12 has a CPU 21, a ROM 22, and a RAM 23 and effects control operation according to a program written in the ROM 22. Signals from key switches 13 of a control panel are supplied to the microcomputer 12 to control the input selector switches 1, 7, the tuner unit 2, the DSP unit 4, the GDC 9, and the switches 5, 10. Statuses of the controlled components are displayed on a display unit 14 and an LED 15 on the control panel.

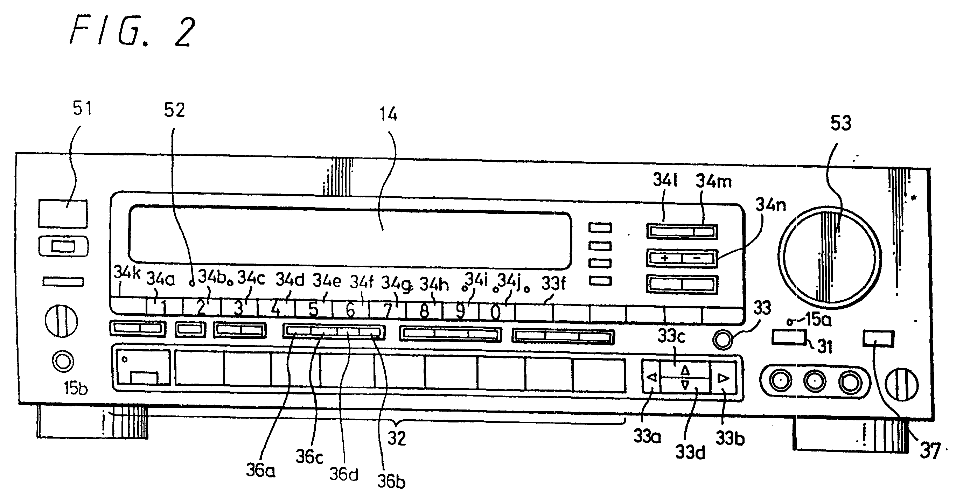

The control panel of the audio equipment is arranged as shown in FIG. 2. In FIG. 2, the control panel has at least a power supply switch 51, an LED 52 for indicating a display on a video signal receiver, a display unit 14, and a dial 53 for volume control. The control panel also has an operation key 31 corresponding to a key switch 13 for muting an audio signal, and an LED 15a for indicating an operation of the operation key 31.

The control panel also includes a group of operation keys 32 corresponding to key switches 13 for controlling functions when the input selector switches 1, 7 are operated. The operation keys 32 include an operation key 32b corresponding to a key switch 13 for selecting an audio signal that is monitored and reproduced from a recording equipment TAPE2 (not shown) through the input selector switch 1 during dubbing operation, and an LED 15b for indicating an operation of the operation key 32b.

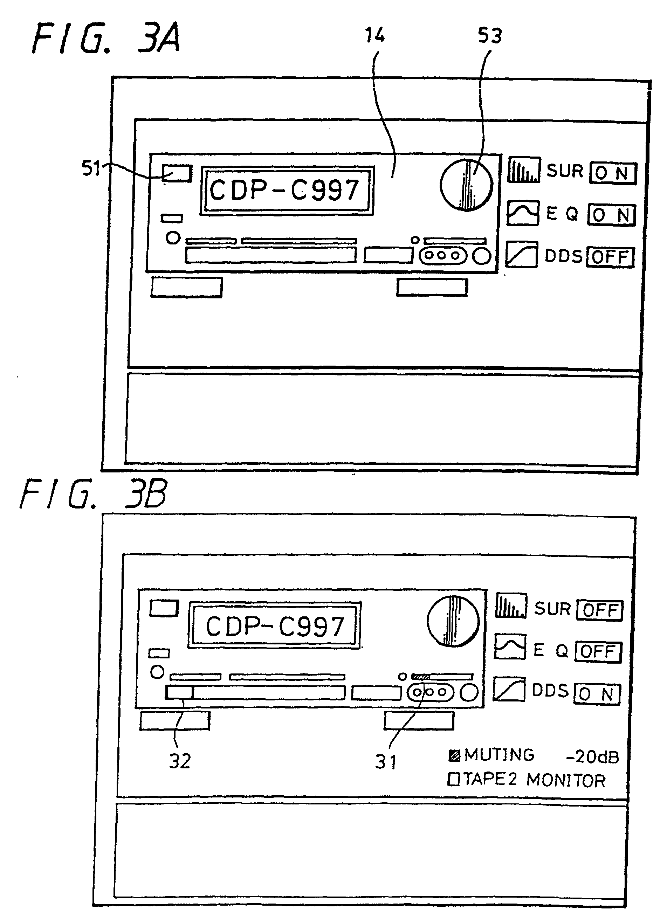

The graphic controller (GDC) 9 generates video signals for displayed images as shown in FIGS. 3A and 3B. In FIG. 3A, an image which simulates the control panel is displayed on a left-hand side of the image displayed on the display unit 14. The simulating image includes images of the power supply switch 51, the display 14, the dial 53, etc.

When one of the operation keys 31, 32 is operated, the display at the position of the operated key is altered as shown in FIG. 3B. In the example shown in FIG. 3, a bright display is produced in a position corresponding to the operation key 31 which mutes the audio signal, and a display in the shape of a bright frame is produced in a position corresponding to the operation key 32b which selects the audio signal monitored and reproduced from the recording equipment TAPE2 during dubbing operation.

Displays similar to those in the displayed image and indicating the function of the operated key are produced at a lower right position in the displayed image. The name of the device which is selected by the input selector switches 1, 7 is displayed in a position corresponding to the image of the display unit 14 in the image simulating the control panel. Functions displayed in the display unit 14, for example, are displayed at enlarged scale in a upper right position in the displayed image.

The audio equipment thus displays highly clearly data of the operated key in the image which simulates the control panel.

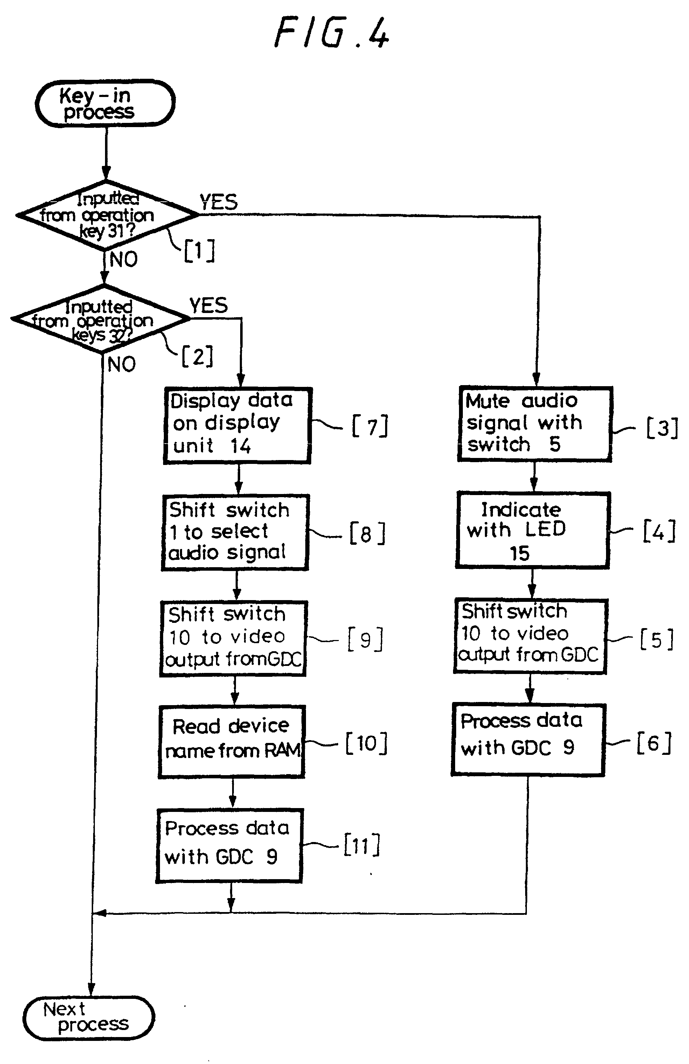

FIG. 4 shows a flowchart of a key-in process for the above operation display process. When the key-in process is started, a step [1] determines whether the operation key 31 is operated or not, and then a step [2] determines whether the operation keys 32 are operated or not. If NO in the steps [1], [2], then control goes to a next process. If YES in the step [1], then the switch 5 is turned off in a step [3] and the LED 15 is energized in a step [4]. The switch 10 is shifted to the GDC 9 in a step [5], and display data are supplied to the GDC 9 in a step [6], after which control goes to the next process.

The above displays are thus carried out in the manner described above.

The control panel shown in FIG. 2 has a group of operation keys 33 corresponding to key switches 13 for registering the names of input devices. The operation keys 33 include four upward, downward, leftward, and rightward operation keys 33a - 33d, a start operation key 33e, and a memory operation key 33f, for example.

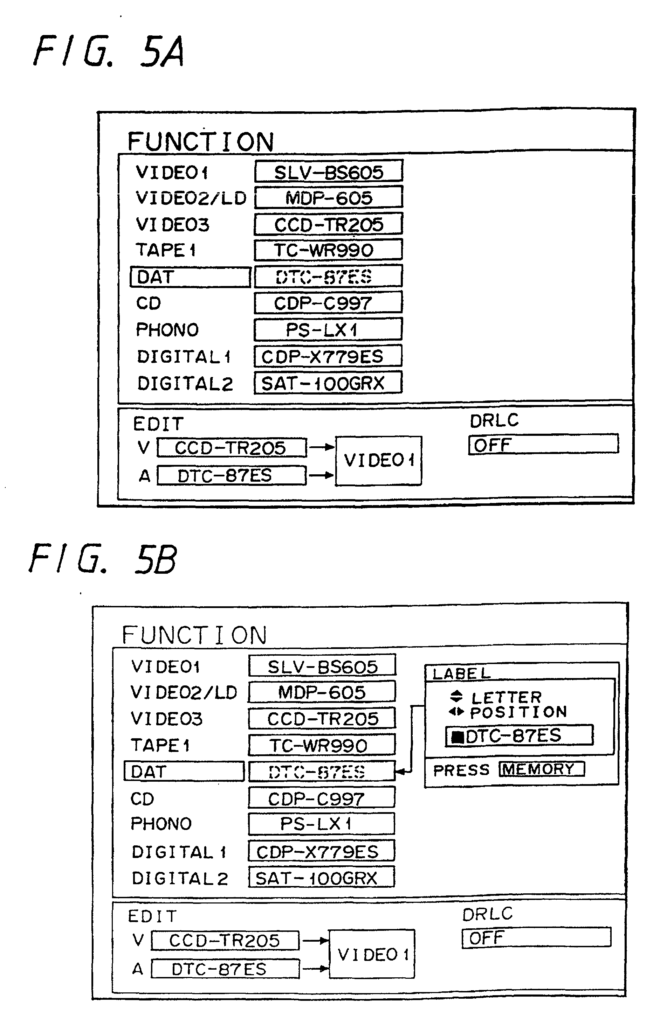

The graphic controller (GDC) of the audio equipment generates video signals for displayed images as shown in FIGS. 5A and 5B. In FIG. 5A, the original names of the respective input terminals 3 are displayed in a left-hand side of the image, and the names of devices connected to the respective input terminals 3 are displayed in a central portion of the image. When one of the input devices is selected by the operation key 32, the display "DAT" is surrounded by a frame as shown, and the color of the displayed name of the device is altered.

When the start operation key 33e is operated with the input device thus selected, an image for registering the name of the input device is displayed as shown in FIG. 5B. When the leftward and rightward operation keys 33a, 33b, for example, are operated, the position of characters for names to be registered is changed. The upward and downward operation keys 33c, 33d can be operated in any desired position. When the upward and downward operation keys 33c, 33d are operated in a desired position, the character displayed in that position is changed.

The available characters include alphabetical letters in upper and lower cases, numerals, simple symbols, etc., and can successively be displayed when the operation keys 33c, 33d are operated. The name of a desired device can be produced by operating the operation keys 33a - 33d successively. When the name of a device is completed, the memory operation key 33f is operated to register the name of the device.

If an editing process (EDIT) is carried out, then the name of the input device is displayed in a lower portion of the displayed image. The display is produced by copying the name which has been registered. If the audio equipment supplies the audio and video signals to another room (DRLC), then the name of the device which produces the signal that is supplied to the other room is displayed. This display is also produced by copying the name which has been registered.

The audio equipment thus displays highly clearly a selected signal with a list of names of devices connected to the input terminals 3.

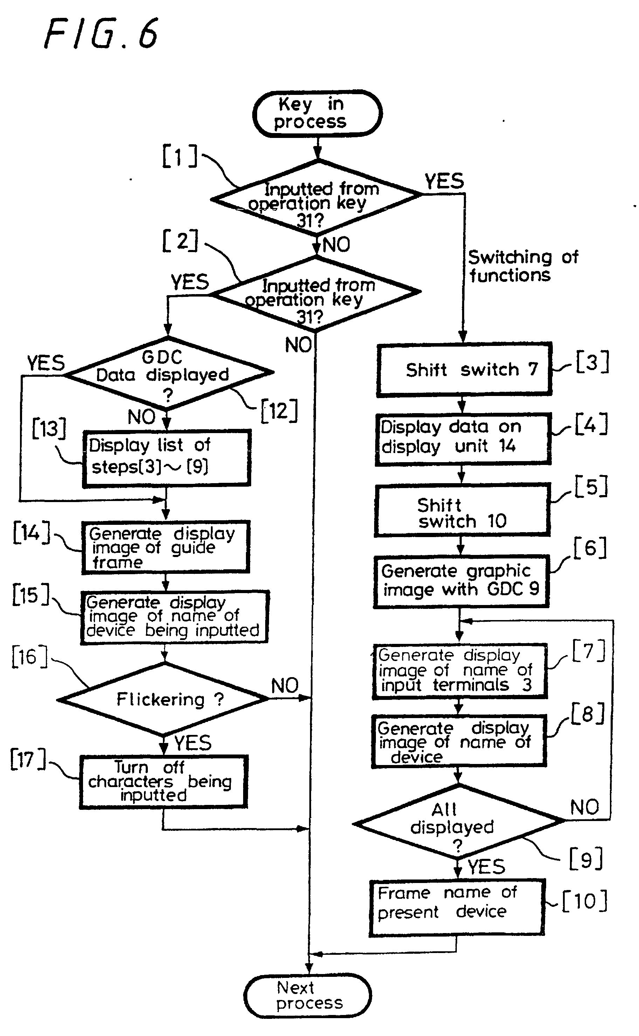

FIG. 6 shows a flowchart of a key-in process for the above operation display process. When the key-in process is started, a step [1] determines whether the operation keys 32 are operated or not, and then a step [2] determines whether the operation keys 33 are operated or not. If NO in the steps [1], [2], then control goes to a next process. If YES in the step [1], then the switch 7 is shifted in a step [3], and then data is displayed on the display unit 14 in a step [4]. The switch 10 is shifted to the GDC 9 in a step [5], and display data is supplied to the GDC 9 in a step [6]. A display image of original names of the input terminals 3 is generated in a step [7], and a display image of names of devices connected to the input terminals 8 is generated in a step [8]. A step [9] then determines whether all names are displayed or not. If not displayed yet, then control returns to the step [7]. If all names are displayed, then the display of the name of the selected device is altered in a step [10], after which control goes to the next process.

If YES in the step [2], then a step [12] determines whether data from the GDC 9 is displayed or not. If not displayed, then the steps [3] - [9] are executed in a step [13]. If displayed, then the display of the name of the selected device is altered in a step [14]. A display image of the name of the device being inputted is generated in a step [15], which is followed by a step [16] that determines whether the display is flickering or not. If not flickering, then control proceeds to the next process. If flickering, then a display image in which the characters being inputted are turned off is generated in a step [17], from which control goes to the next process.

The above displays are thus carried out in the manner described above.

The control panel shown in FIG. 2 also has operation keys 34 corresponding to key switches 13 for selecting a broadcast signal (selective reception). The operation keys 34 include operation keys 34a ~ 34j for selecting numerals ranging from 1 to 0, an operation key 34k for shifting letters A, B, C, an operation key 341 for directly setting a selected station, and operation keys 34m, 34n for automatically selecting a station or for selecting a station based on an index as described later on.

The operation keys 33 on the control panel also correspond to key switches 13 for registering desired set names of broadcast signals. The operation keys 33 include four upward, downward, leftward, and rightward operation keys 33a ~ 33d, a start operation key 33e, and a memory operation key 33f, for example. The control panel also includes an operation key 35 for setting sound fields as described later on.

The operation keys 34a ~ 34j, 34k are used to select broadcast signals in a total of 30 channels. When the numerical value of a frequency is inputted with the operation keys 34a - 34j after the operation key 341 has been operated, a broadcast signal of that frequency is directly selected.

When the operation key 34m is operated, the frequencies are swept in a direction (+ or - determined by the operation key 34n) to automatically select a broadcast signal. With the broadcast signal directly or automatically selected, the operation keys 34a ~ 34j, 34k, and the memory operation key 33f are operated to set the frequency of the selected broadcast signal to a selected channel. The set information is stored in the RAM 23.

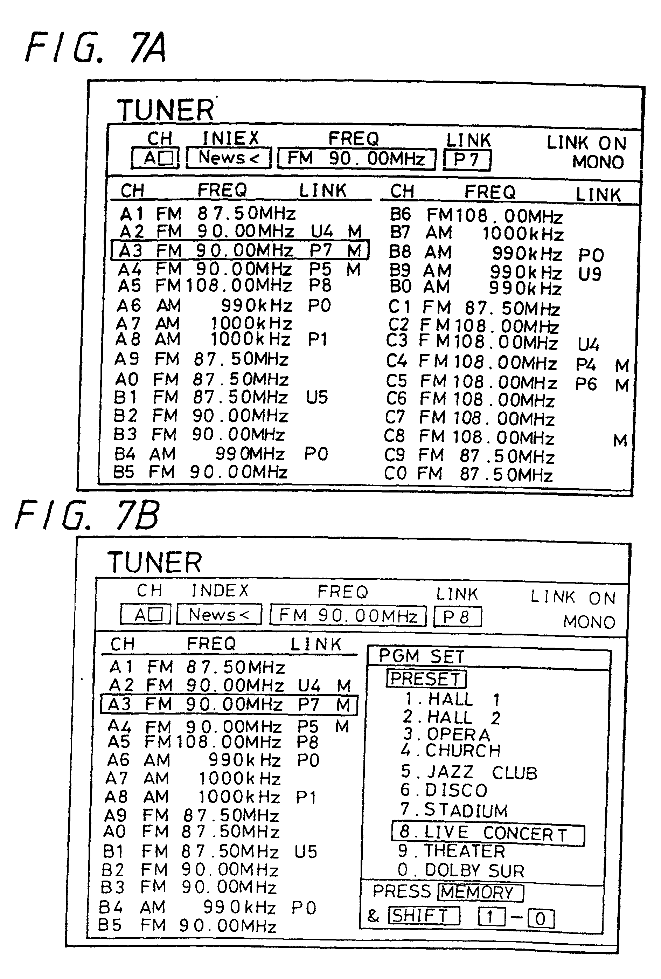

The graphic controller (GDC) 9 of the audio equipment generates video signals of display images as shown in FIGS. 7A and 7B. In FIG. 7A, the image is divided into left and right images, and the numbers of a total of 30 channels composed of letters A, B, C and numerals 1 ~ 0 are displayed in left-hand sides of each of the left and right images. The bands FM/AM and the frequencies of broadcast signals that can selectively be received are displayed centrally in the left and right images, and information indicative of set sound fields is displayed in right-hand sides of each of the left and right images. When a channel is selected with the operation keys 34, the selected channel which is displayed is surrounded by a frame and its displayed color is altered as indicated at the channel A3.

With the channel selected, when the operation key 35 for setting a sound field is operated, an image for setting a sound field is displayed as shown in FIG. 7B. A desired sound field is established when the operation keys 34a ~ 34j, for example, are operated. There are available typical 10 sound fields that have been preset in the DSP unit 4 and a maximum of 10 sound fields that can be set by the user. When the memory operation key 33f is operated, one of the available sound fields can be set in the selected channel.

With the channel selected, when the start operation key 33e is operated, an image for registering a set name is displayed as shown in FIG. 8A. When the leftward and rightward operation keys 33a, 33b, for example, are operated, the position of characters for names to be registered is changed. When the upward and downward operation keys 33c, 33d are operated in any desired position, the character displayed in that position is changed. The available characters include alphabetical letters in upper and lower cases, numerals, simple symbols, etc., and can successively be displayed when the operation keys 33c, 33d are operated. A desired set name can be produced by operating the operation keys 33a ~ 33d successively. When the set name is completed, the memory operation key 33f is operated to register the set name.

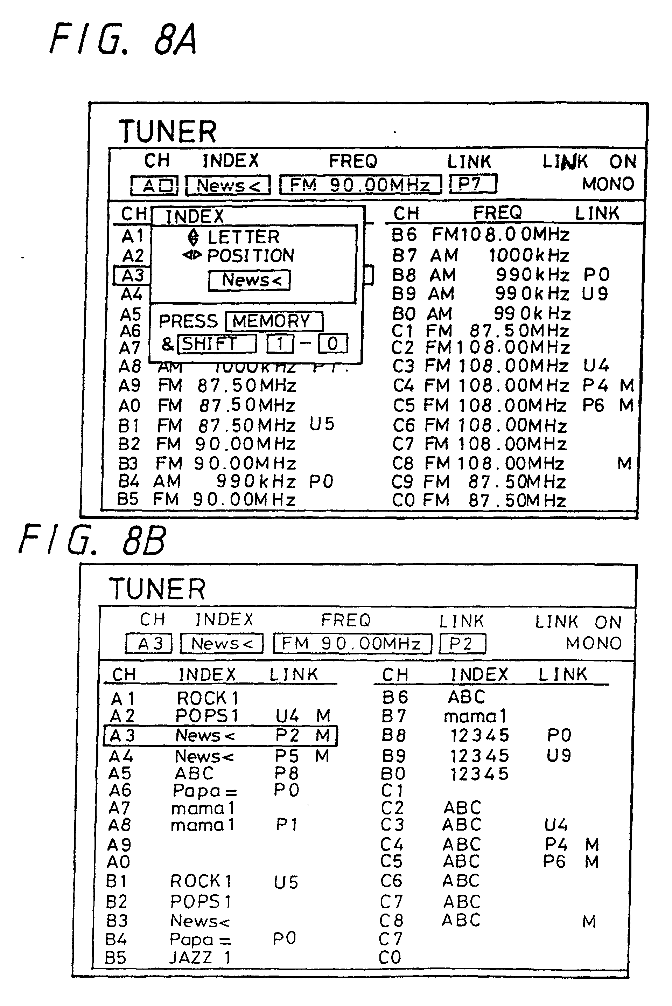

The graphic controller (GDC) 9 switches between the above image and a display image shown in FIG. 8B. The image shown in FIG. 8B is divided into left and right images, and the numbers of a total of 30 channels composed of letters A, B, C and numerals 1 ~ 0 are displayed in left-hand sides of each of the left and right images. The bands FM/AM and the set names of broadcast signals that can selectively be received are displayed centrally in the left and right images, and information indicative of set sound fields is displayed in right-hand sides of each of the left and right images. When a channel is selected with the operation keys 34, the selected channel which is displayed is surrounded by a frame and its displayed color is altered as indicated at the channel A3. When broadcast signals are selected based on indexes, only those broadcast signals having the same set name are successively selected.

The audio equipment thus clearly displays the states of selectively received broadcast signals on a list of the frequencies of broadcast signals, desired set names, and sound field setting information.

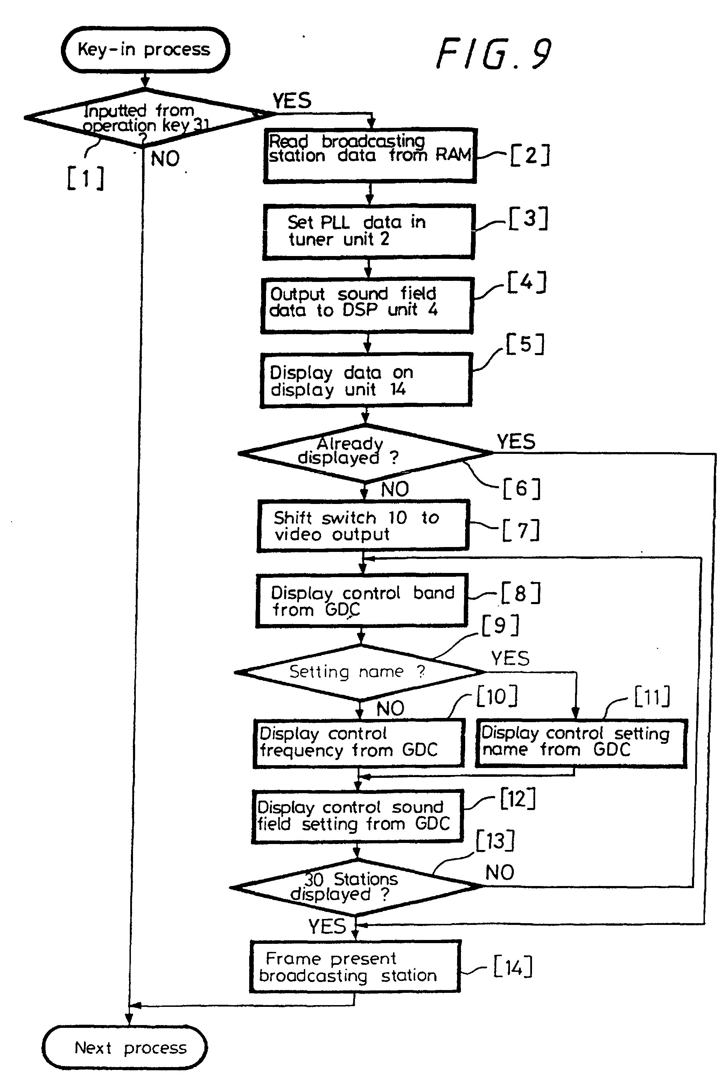

FIG. 9 shows a flowchart of a key-in process for the above operation display process. When the key-in process is started, a step [1] determines whether the operation keys 34 are operated or not. If NO, then control proceeds to a next process. If YES, data stored in the RAM 23 is read in a step [2], and a frequency is set in the tuner unit 2 in a step [3]. A step [4] sets a sound field in the DSP unit 4, and a step [5] displays data on the display unit 14.

A step [6] determines whether data has already been displayed or not. If YES, control goes to the next process. If NO, the switch 10 is shifted to the GDC 9 in a step [7], and then band display data is supplied to the GDC 9 in a step [8]. A step [9] determines whether there is a setting name or not. If there is no setting name (NO), then display data for a frequency is supplied to the GDC 9 in a step [10]. If there is a setting name (YES), then display data for the setting name is supplied to the GDC 9 in a step [11].

Display data for setting a sound field is supplied to the GDC 9 in a step [12]. A step [13] then determines whether 30 stations have been displayed or not. If NO, then control returns to the step [8]. If YES, then a display image in which a channel being received is surrounded by a frame is generated. Thereafter, control goes to the next process.

The above display can therefore be carried out in the manner described above.

The control panel shown in FIG. 2 also has operation keys corresponding to key switches 13 for selecting settings for characteristic processing. The 10 operation keys 34a ~ 34j indicative of the numerals 1 ~ 0 double as these operation keys.

The operation keys 33 on the control panel also correspond to key switches 13 for the user to provide a desired sound field. The operation keys 33 include four upward, downward, leftward, and rightward operation keys 33a ~ 33d, a start operation key 33e, and a memory operation key 33f, for example.

The control panel also includes operation keys 36 corresponding to key switches 13 for the user to set a desired equalizer curve. The operation keys 36 include an operation key 36a for turning on and off an equalizer, an operation key 36b for displaying an equalizer curve, an operation key 36c for controlling an equalizer band, and an operation key 36d for controlling the level of the middle range of the equalizer curve.

The control panel also includes an operation key 37 corresponding to a key switch 13 for the user to provide a desired dynamic range. The operation key 37 serves to turn on and off a dynamic range correcting mode, for example.

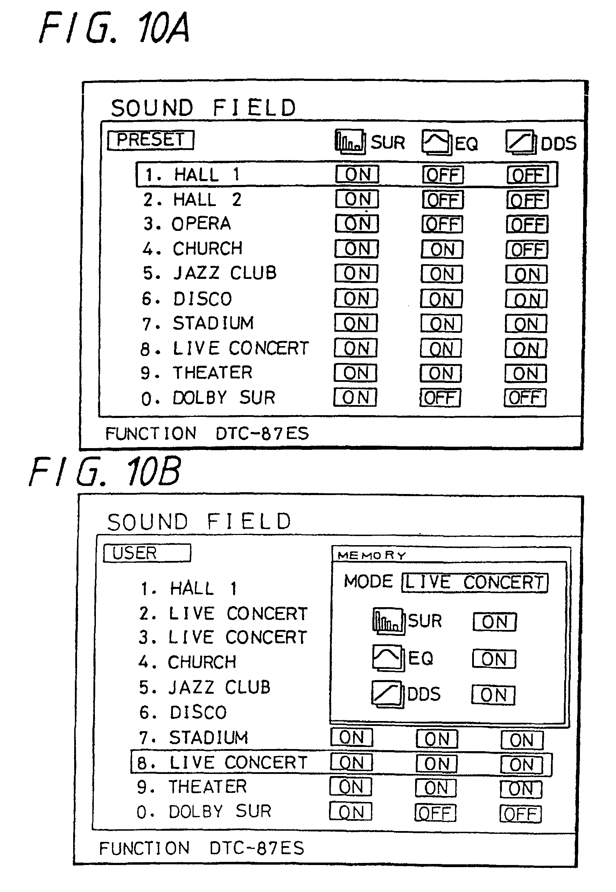

The graphic controller (GDC) 9 of the audio equipment generates video signals of display images as shown in FIGS. 10A and 10B. In FIG. 10A, preset characteristics stored in the ROM 22 are displayed as the names of basic sound fields are displayed in a left-hand side of the image, and the on and off states of a sound field (surround) mode, an equalizer mode, and a dynamic range correcting mode are displayed in a right-hand side of the image. When the name of a desired sound field is selected with the operation keys 34a ~ 34j, the displayed name is surrounded by a frame as indicated at HALL 1, for example. Audio signals can thus be processed in one of the 10 basic sound fields.

If the user wishes to set desired characteristics, then the start operation key 33e is operated. When the start operation key 33e is operated, an image for setting characteristics is displayed as shown in FIG. 10B. When the operation keys 33a ~ 33d are operated, the characteristics of a sound field (surround) are variously changed.

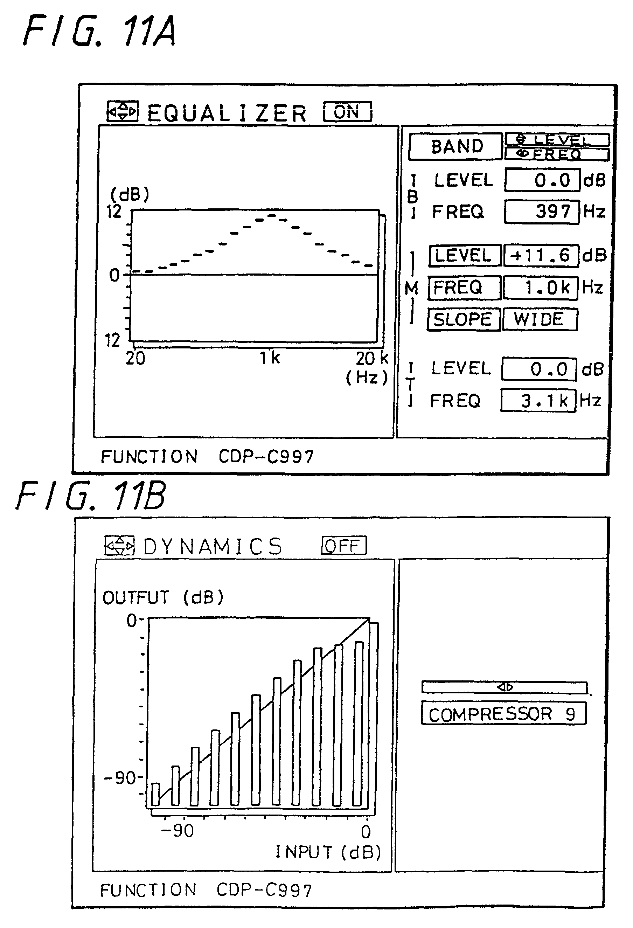

To set a desired equalizer curve, the start operation key 33e is operated with the operation keys 36a on, and the display operation key 36b is operated. Now, an image for setting an equalizer is displayed as shown in FIG. 11A. When the operation key 36c for controlling the equalizer band is operated and the operation keys 33a ~ 33d are operated, the level of each frequency is controlled. As the level of each frequency is controlled, the curve of the image is varied. When required, the level of the middle range of the equalizer curve is controlled with the operation key 36d. The above control processes are effected in each of the bands until the entire equalizer curve (characteristics) is established.

To provide a desired dynamic range, the start operation key 33e is operated with the dynamic range correcting mode being on with the operation key 37. Now, an image for providing a dynamic range is displayed as shown in FIG. 10B. When the operation keys 33a, 33b are operated, the characteristic curve of a dynamic range is controlled to change from a compressor curve into an expander curve. As the characteristic curve of a dynamic range is controlled, the curve in the image is varied.

When the sound field (surround), the equalizer curve, and the dynamic range have achieved desired characteristics, the memory operation key 33f is operated, and the operation keys 34a ~ 34j are operated to store the set characteristics in addresses in the RAM 23 that have been designated by the operation keys 34a ~ 34j.

The audio equipment can thus clearly display selected states of signals on a list of a plurality of settings.

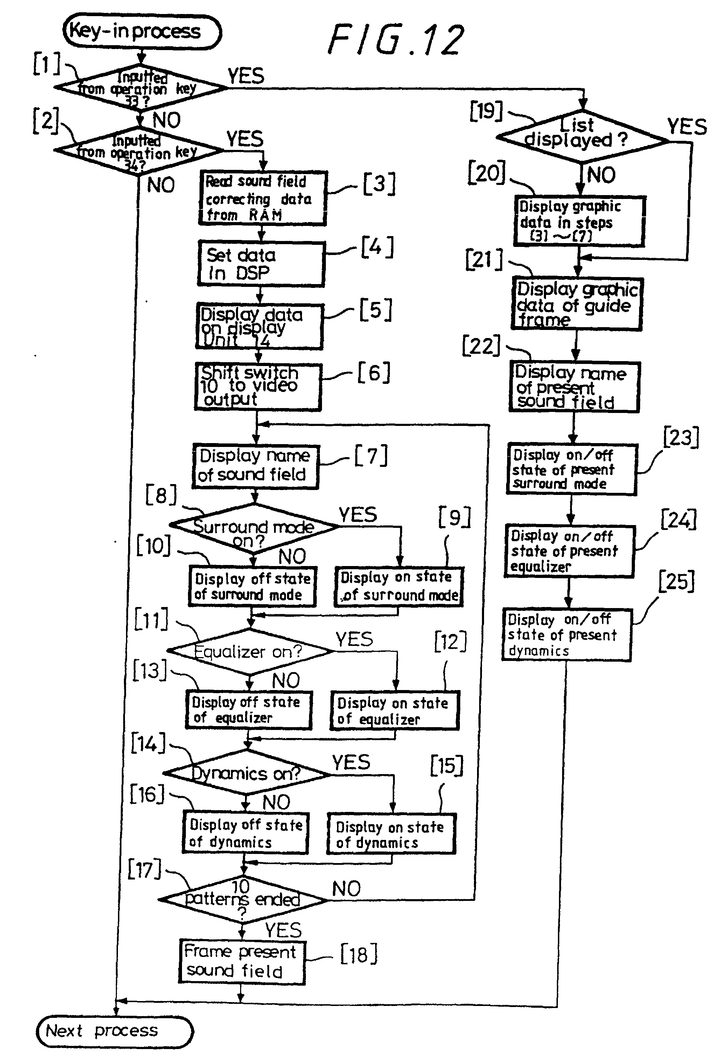

FIG. 12 shows a flowchart of a key-in process for the above operation display process. When the key-in process is started, a step [1] determines whether the operation keys 33 are operated or not and a step [2] determines whether the operation keys 34 are operated or not. If NO in the steps [1], [2], then control proceeds to a next process. If YES in the step [2], data stored in the RAM 23 is read in a step [3], and the read data is set in the DSP 4 in a step [4]. A step [5] displays the data on the display unit 14, and a step [6] shifts the switch 10 to the GDC 9.

Thereafter, a step [7] supplies display data of basic sound fields to the GDC 9. A step [8] determines whether a sound field (surround) correcting mode is on or not. If on, then display data "ON" is supplied to the GDC 9. If off, then display data "OFF" is supplied to the GDC 9. Thereafter, a step [8] determines whether a sound field (surround) correcting mode is on or not. If on, then display data "ON" is supplied to the GDC 9 in a step [9]. If off, then display data "OFF" is supplied to the GDC 9 in a step [10]. A step [11] determines whether an equalizer mode is on or not. If on, then display data "ON" is supplied to the GDC 9 in a step [12]. If off, then display data "OFF" is supplied to the GDC 9 in a step [13]. Thereafter, a step [14] determines whether a dynamic range correcting is on or not. If on, then display data "ON" is supplied to the GDC 9 in a step [15]. If off, then display data "OFF" is supplied to the GDC 9 in a step [16].

A step [17] determines whether data of 10 sound field characteristics have been displayed or not. If NO, then control goes back to the step [7]. If YES, a step [18] generates a display image in which the display of a selected sound field is surrounded by a frame. Thereafter, control goes to the next process.

If YES in the step [1], then a step [19] determines data from the GDC 9 is displayed or not. If not displayed, then the steps [3] ~ [17] are executed in a step [20]. If displayed, the display of the selected sound field is altered in a step [21]. A step [22] generates a display image of the selected sound field, and a step [23] generates a display image of an on/off state of the sound field (surround) correcting mode for the selected sound field. A step [24] generates a display image of an on/off state of the equalizer mode for the selected sound field, and a step [25] generates a display image of an on/off state of the dynamic range correcting mode for the selected sound field. Thereafter, control goes to the next process.

The above display can therefore be carried out in the manner described above.

The control panel shown in FIG. 2 also has operation keys corresponding to key switches 13 for selecting settings for sound field (surround) characteristic processing. The 10 operation keys 34a ~ 34j indicative of the numerals 1 ~ 0 double as these operation keys.

The control panel also has operation keys corresponding to key switches 13 for the user to change to a desired sound field. The start operation key 33e and the four upward, downward, leftward, and rightward operation keys 33a ~ 33d double as these operation keys.

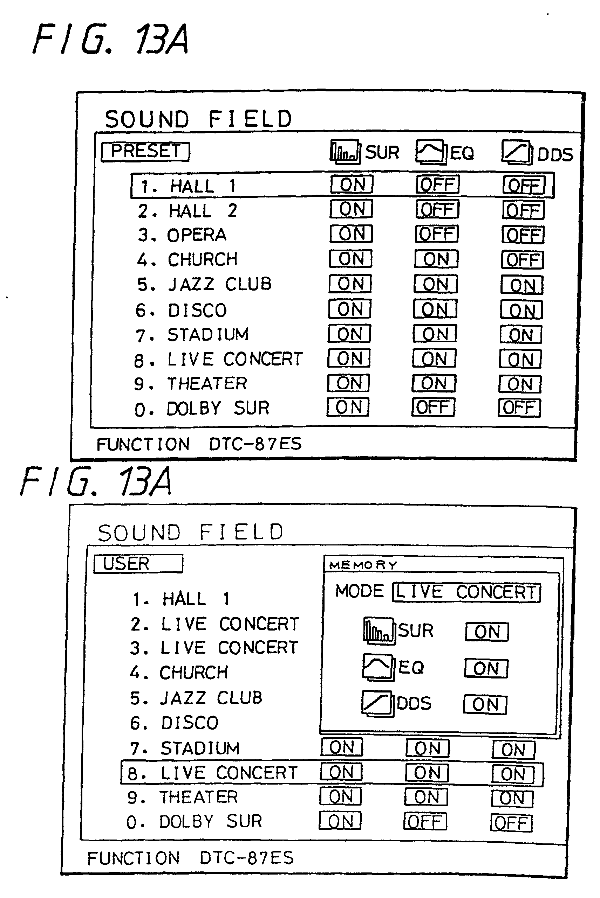

The graphic controller (GDC) 9 of the audio equipment generates video signals of display images as shown in FIGS. 13A and 13B. In FIG. 13A, preset characteristics stored in the ROM 22 are displayed as the names of basic sound fields are displayed in a left-hand side of the image, and the on and off states of a sound field (surround) mode, an equalizer mode, and a dynamic range correcting mode are displayed in a right-hand side of the image. When the name of a desired sound field is selected with the operation keys 34a ~ 34j, the displayed name is surrounded by a frame as indicated at HALL 1, for example. Audio signals can thus be processed in one of the 10 basic sound fields.

The start operation key 33e is operated to display an image for setting characteristics as shown in FIG. 10B. When the operation keys 33a ~ 33d, for example, are operated, the characteristics of a sound field (surround) are variously changed.

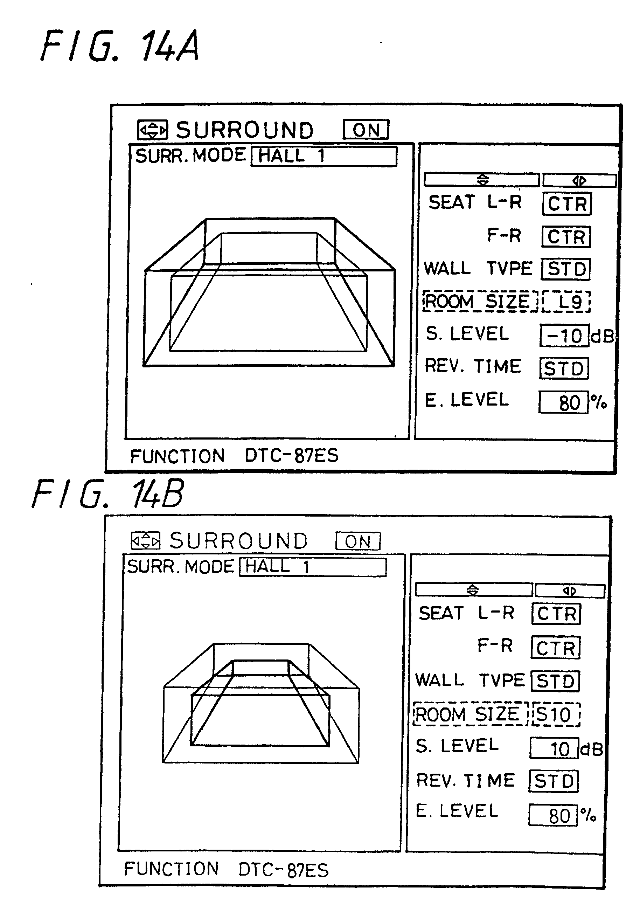

The characteristics of a sound field (surround) comprise parameters including the size of a room (the shape of a sound field), the material of a wall surface, the position of a seat, the level of a surround effect, the duration of a reverberation. Desired ones of these parameters are selected with the operation keys 33a, 33b. When the parameter indicative of the size of a room is selected, an image for setting the size of a room is displayed as shown in FIGS. 14A and 14B.

Then, the operation keys 33c, 33d are operated to modify the parameter indicative of the size of a room, thus varying the image as shown in FIG. 14A or 14B. In FIGS. 14A and 14B, thinner lines represent the size of a standard room (the shape of a sound field). As the operation keys 33c, 33d are operated, an image indicated by thicker lines is enlarged or contracted.

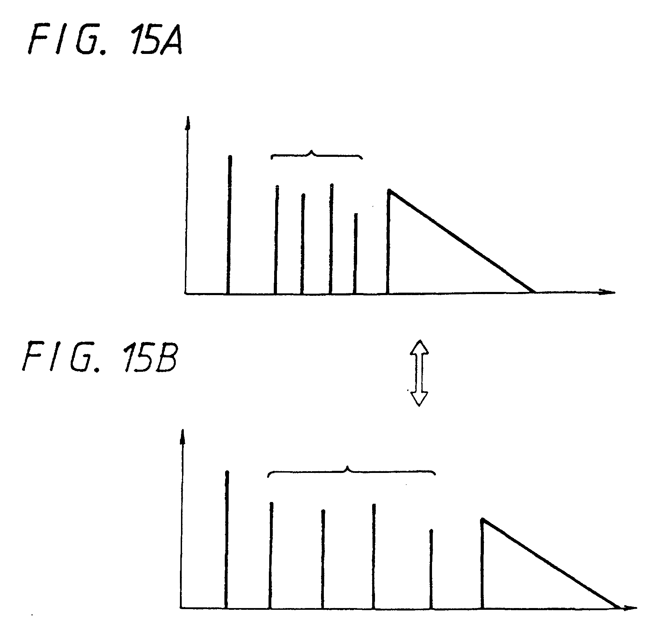

The parameter indicative of the size of a room corresponds to the time for which reflected sounds simulated as shown in FIG. 15A or 15B endures. Since the representations of FIGS. 15A and 15B are difficult to understand, the size of a room is displayed as an image as shown in FIGS. 14A and 14B for an easier visual recognition of the room size.

The audio equipment thus clearly displays an image representing the shape of a standard sound field, which image can be enlarged or contracted as the parameter of the size of the sound field is modified.

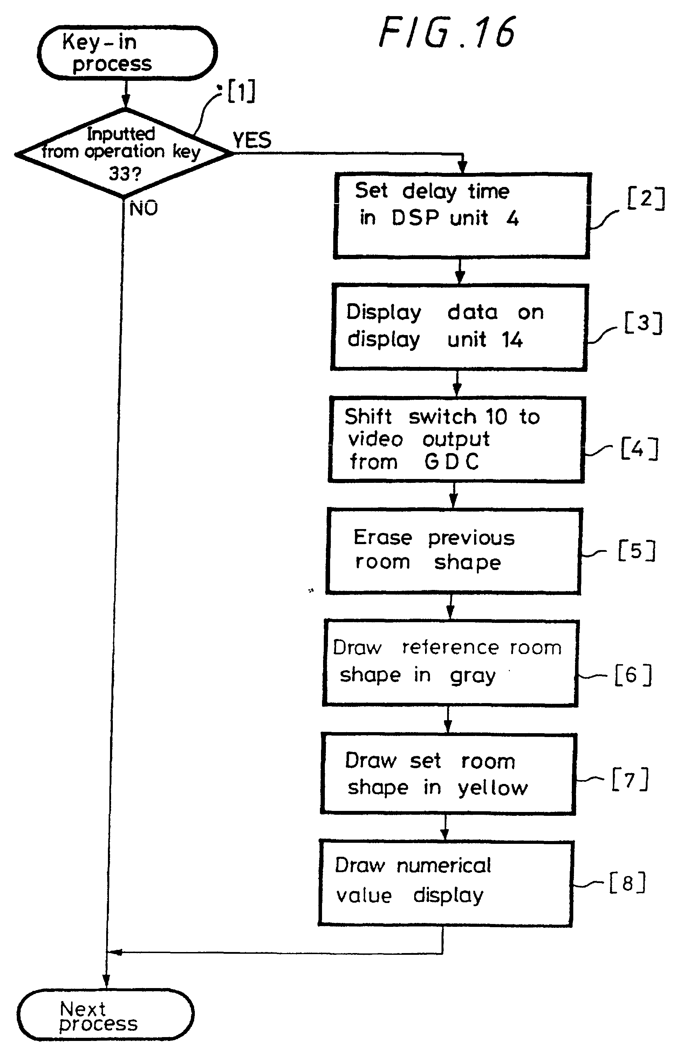

FIG. 16 shows a flowchart of a key-in process for the above operation display process. When the key-in process is started, a step [1] determines whether the operation keys 33 are operated or not. If NO, control proceeds to a next process. If YES, delay time data stored in the RAM 23 is read and set in the DSP unit 4 in a step [2]. The data is then displayed on the display unit 14 in a step [3], and the switch 10 is shifted to the GDC 9 in a step [4].

In a step [5], the previous display data from the GDC 9 is erased. Display data (represented by thinner lines) of the shape of a standard sound field is supplied in a step [6]. Display data of the shape of a set sound field set is supplied in a step [7]. Then, numerical display data is supplied in a step [8], after which control goes to the next process.

The above display can therefore be carried out in the manner described above.

While the size of a room has been described above as the shape of a sound field, the present invention is also applicable to changing of the shape of a sound field such as a square or sectorial sound field, for example.

The control panel shown in FIG. 2 also has operation keys corresponding to key switches 13 for selecting settings for sound field (surround) characteristic processing. The 10 operation keys 34a ~ 34j indicative of the numerals 1 ~ 0 double as these operation keys.

The control panel also has operation keys corresponding to key switches 13 for the user to change to a desired sound field. The start operation key 33e and the four upward, downward, leftward, and rightward operation keys 33a ~ 33d double as these operation keys.

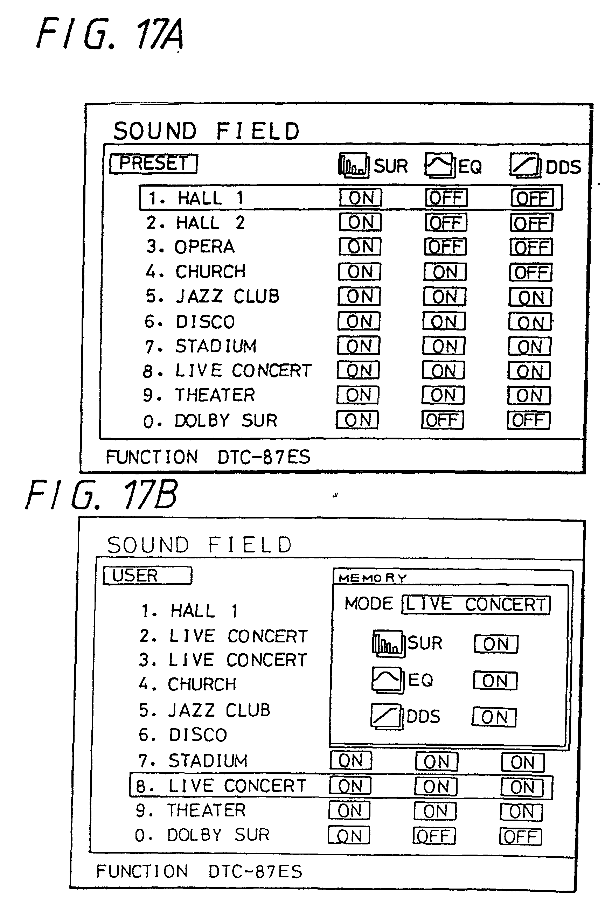

The graphic controller (GDC) 9 of the audio equipment generates video signals of display images as shown in FIGS. 17A and 17B. In FIG. 17A, preset characteristics stored in the ROM 22 are displayed as the names of basic sound fields are displayed in a left-hand side of the image, and the on and off states of a sound field (surround) mode, an equalizer mode, and a dynamic range correcting mode are displayed in a right-hand side of the image. When the name of a desired sound field is selected with the operation keys 34a ~ 34j, the displayed name is surrounded by a frame as indicated at HALL 1, for example. Audio signals can thus be processed in one of the 10 basic sound fields.

The start operation key 33e is operated to display an image for setting characteristics as shown in FIG. 17B. When the operation keys 33a ~ 33d, for example, are operated, the characteristics of a sound field (surround) are variously changed.

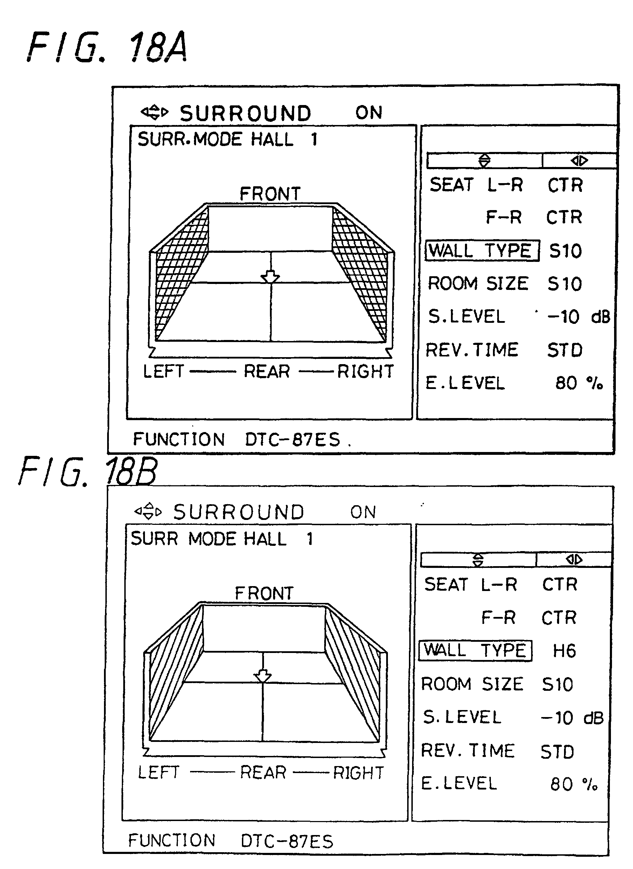

The characteristics of a sound field (surround) comprise parameters including the size of a room (the shape of a sound field), the material of a wall surface, the position of a seat, the level of a surround effect, the duration of a reverberation. Desired ones of these parameters are selected with the operation keys 33a, 33b. When the parameter indicative of the size of a room is selected, an image for setting the material of a wall surface is displayed as shown in FIGS. 18A and 18B.

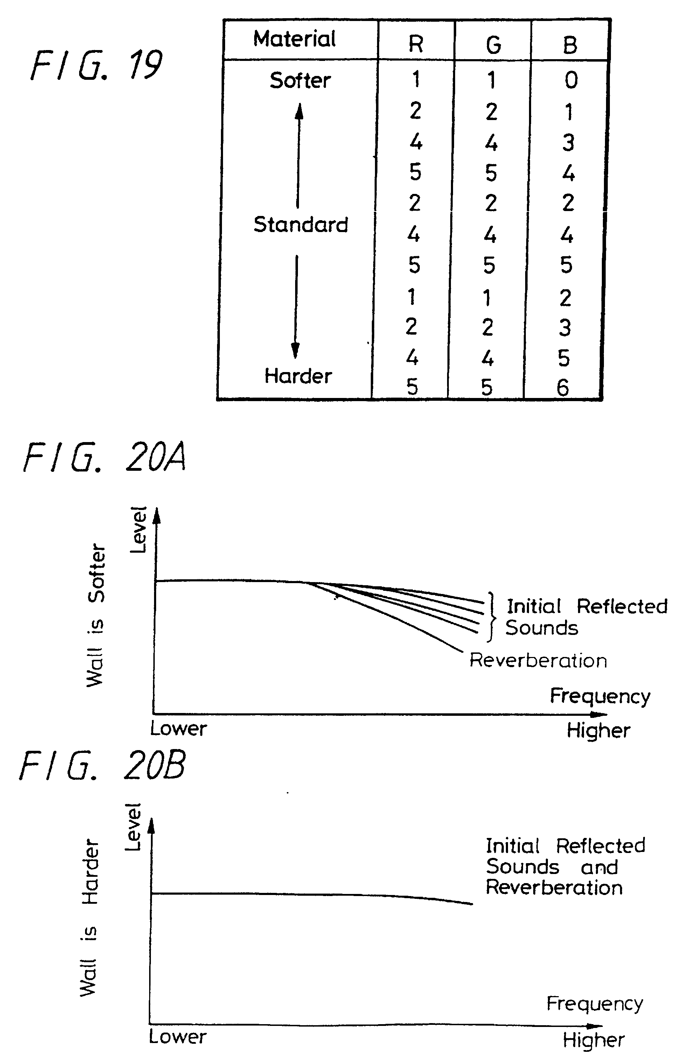

Then, the operation keys 33c, 33d are operated to modify the parameter indicative of the material of a wall surface, thus varying the image as shown in FIG. 18A or 18B. FIGS. 18A and 18B illustrate the shape of a sound field. AS the operation keys 33c, 33d are operated, the color of an image portion corresponding to the wall surface is varied. More specifically, the ratio of mixture of red (R), green (G), and blue (B) of the displayed color in the image portion is varied as indicated in the table of FIG. 19. According to the table of FIG. 19, the colors of materials in upper rows (softer materials) are indicated as warmer colors, and the colors of materials in lower rows (harder materials) are indicated as colder colors.

The parameter indicative of the material of a wall surface corresponds to a change in the frequency characteristic (filter) with respect to initial reflected sounds and reverberation as shown in FIGS. 20A and 20B. Since the representations of FIGS. 20A and 20B are difficult to understand, the material of a wall surface is displayed as a change in the color of an image portion corresponding to the wall surface as shown in FIGS. 18A and 18B for an easier visual recognition of the wall material.

The audio equipment thus clearly displays an image representing the shape of a standard sound field, with the color of an image portion which corresponds to a wall surface being varied as the parameter indicative of the material of the wall surface is varied.

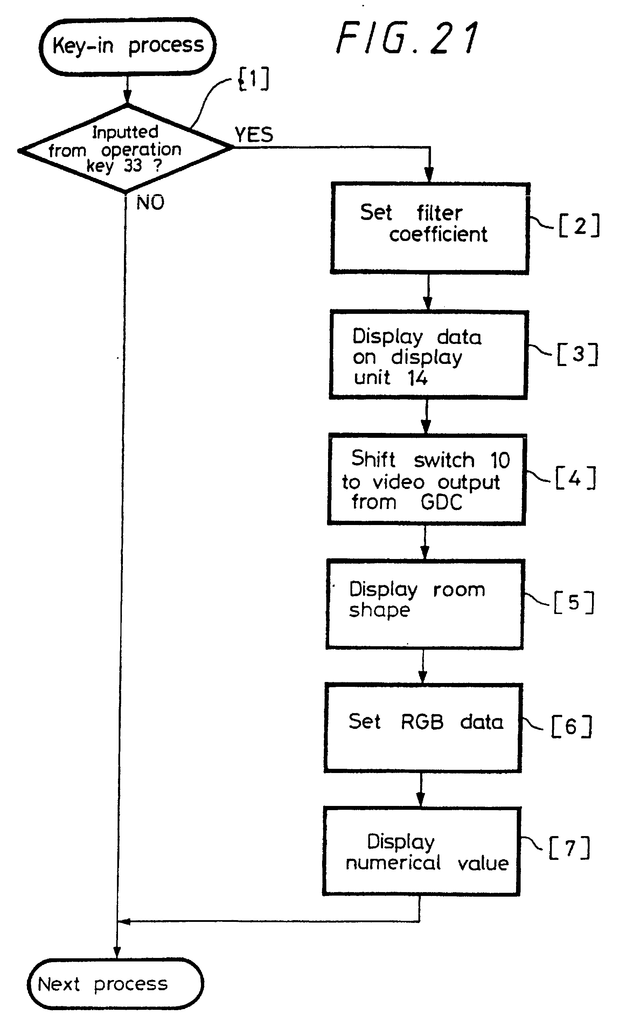

FIG. 21 shows a flowchart of a key-in process for the above operation display process. When the key-in process is started, a step [1] determines whether the operation keys 33 are operated or not. If NO, control proceeds to a next process. If YES, filter coefficient data stored in the RAM 23 is read and set in the DSP unit 4 in a step [2]. The data is then displayed on the display unit 14 in a step [3], and the switch 10 is shifted to the GDC 9 in a step [4].

A step [5] supplies display data of the shape of a sound field to the GDC 9, and a step [6] supplies color data (RGB) of the material of a wall surface of the set sound field to draw on an image portion corresponding to the wall surface. After numerical display data is supplied in a step [7], control goes to the next process.

The above display can therefore be carried out in the manner described above.

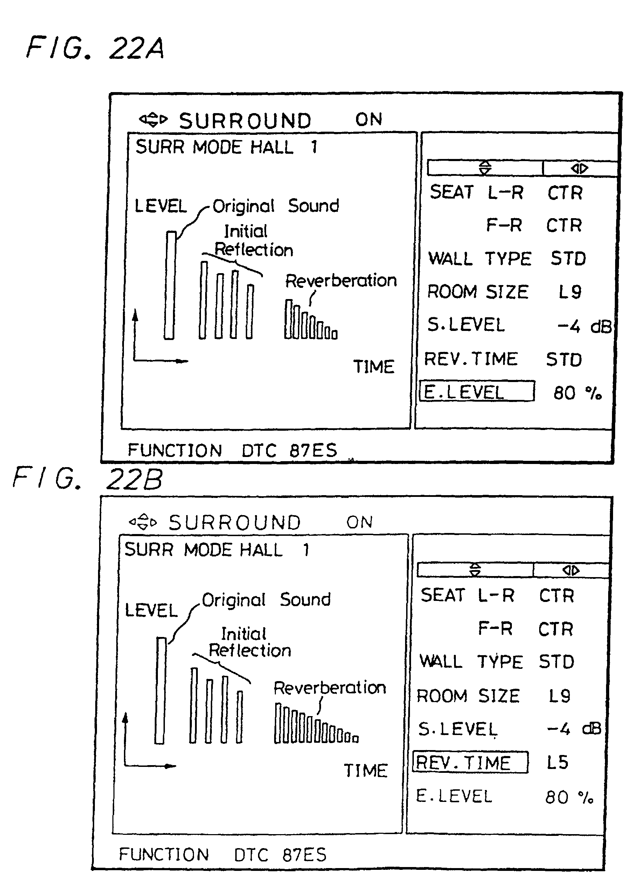

To set the parameter of the position of a seat, the position of the arrow shown in FIGS. 18A and 18B is moved forward, backward, leftward, or rightward. To set the parameter of the level of a surround effect, images representing original sound, initial reflection, and reverberation are displayed as shown in FIG. 22A, and the heights of the graphs indicating initial reflection and reverberation are varied. To set the parameter of the duration of reverberation, images representing original sound, initial reflection, and reverberation are displayed as shown in FIG. 22B, and the height of the graph indicating reverberation is varied. Therefore, these displays can clearly be produced.

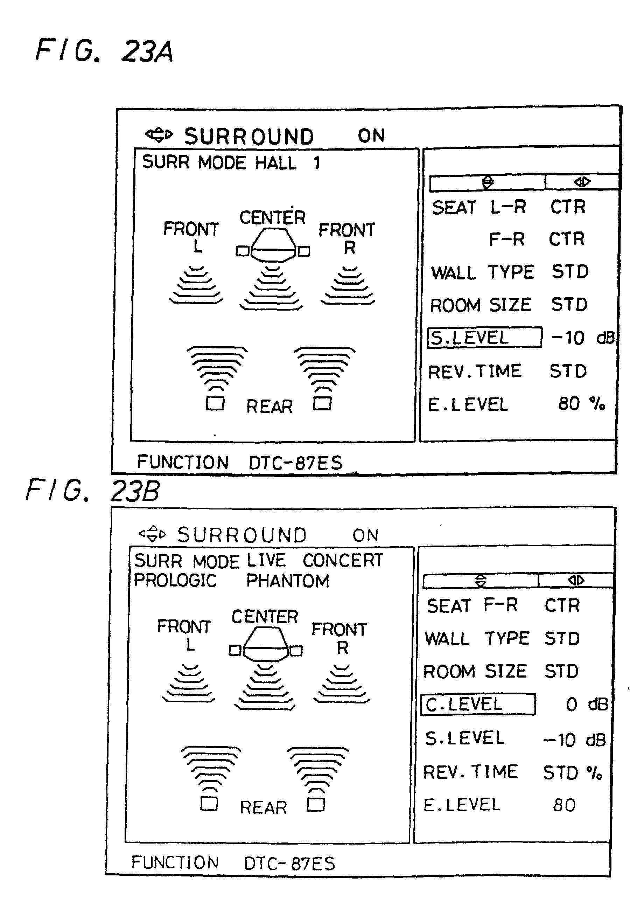

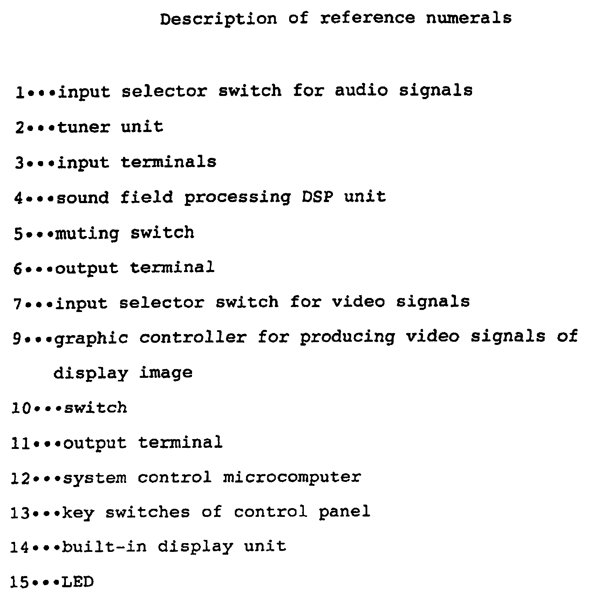

FIGS. 23A and 23B show display images for setting sound levels. FIG. 23A illustrates a surround level, and FIG. 23B illustrates a center level, both through the number of thick lines. In this manner, the sound levels can clearly be displayed.

## Claims

1. A broadcast receiving apparatus for receiving a plurality of radio broadcast signals and for processing a received external video signal for output to and for display on an electronic display screen included in a video signal receiver comprising:
means (4) for applying desired sound field setting to one of the plurality of radio broadcast signals; and
control means for enabling the user of the apparatus to modify the sound field setting information; wherein the broadcast receiving apparatus comprises:
means (23) for storing frequencies of radio broadcast signals that can selectively be received, index names associated with the respective radio broadcast signals, and sound field setting information corresponding respectively to the plurality of radio broadcast signals, wherein the plurality of radio broadcast signals is selectively receivable;
means (9, 12) for producing an internal video signal for output to the video signal receiver for displaying collectively a list including the frequencies, the index names, and the sound field setting information stored in the means (123) for storing on the electronic display screen included in the video signal receiver;
control means (12, 13) for controlling the means (23) for storing and the means (9, 12) for producing an internal video signal, wherein the control means (12, 13) includes a plurality of keys (13) arranged so that a user can select one of the plurality of radio broadcast signals from the list displayed on the electronic display screen and includes means for enabling the user of the apparatus to modify the sound field setting information corresponding to the selected one of the plurality of radio broadcast signals by displaying on the electronic display screen a sound field setting window including a plurality of user selectable sound field settings so that the user can select, using the plurality of keys (13), a desired sound field setting for the selected one of the plurality of radio broadcast signals, and for storing the desired sound field setting in the means (23) for storing; and wherein
the means (4) for applying the desired field setting is for applying the stored desired sound field setting to said one of the plurality of radio broadcast signals when said radio broadcast signal is selectively received.

2. The broadcast receiving apparatus according to claim 1, wherein the control means (12, 13) further comprises index name changing means for enabling the user of the apparatus to modify the index name corresponding to the selected one of the plurality of radio broadcast signals by displaying on the electronic display screen an index name changing window including a plurality of alphanumeric characters so that the user can select using the plurality of keys a desired index name for the selected one of the plurality of radio broadcast signals, and for storing the desired index name in the means (23) for storing.

3. A selecting method for use in a broadcast receiving apparatus for receiving a plurality of radio broadcast signals and for processing a received external video signal for output to and for display on an electronic display screen included in a video signal receiver, said broadcast receiving apparatus comprising means for storing (23) frequencies of radio broadcast signals that can selectively be received index names associated with the respective radio broadcast signals and sound field setting information corresponding respectively to the plurality of radio broadcast signals, the method comprising the steps of:
applying a desired sound field setting to one of the plurality of radio broadcast signals; and
enabling the user of the apparatus to modify the sound field setting information, wherein said step of enabling the user of the apparatus to modidify comprises:
producing (9, 12) an internal video signal for output to the video signal receiver for displaying collectively a list including the frequencies, the index names, and the sound field setting information stored in the means for storing (23) on the electronic display screen included in the video signal receiver;
enabling the user to select one of the plurality of radio broadcast signals from the list displayed on the electronic display screen;
enabling the user of the apparatus to modify the sound field setting information corresponding to the selected one of the plurality of radio broadcast signals by displaying on the electronic display screen a sound field setting window including a plurality of user selectable sound field settings so that the user can select, using the plurality of keys, a desired sound field setting for the selected one of the plurality of radio broadcast signals;
storing (23) the desired sound field setting to correspond to said selected one of said plurality of radio broadcast signals; and
applying (4) the desired sound field setting to said one of the plurality of radio broadcast signals when said radio broadcast signal is selectively received

4. The selecting method according to claim 3, further comprising the ' step of enabling the user of the apparatus to modify the index name corresponding to the selected one of the plurality of radio broadcast signals by displaying on the electronic display screen an index name changing window including a plurality of alphanumeric characters so that the user can select a desired index name for the selected one of the plurality of radio broadcast signals.

## Patentansprüche

1. Rundfunk- bzw. Funkempfangsvorrichtung zum Empfang einer Vielzahl von Funksendesignalen und zur Verarbeitung eines empfangenen externen Videosignals für die Abgabe an einen und Anzeige auf einem elektronischen Anzeigeschirm, der in einem Videosignalempfänger enthalten ist,
umfassend eine Einrichtung (4) zur Anwendung einer gewünschten Schallfeldeinstellung auf eines der Vielzahl von Funksendesignalen und eine Steuereinrichtung, die es dem Benutzer der Vorrichtung ermöglicht, die Schallfeld-Einstellinformation zu modifizieren,
wobei die Rundfunk- bzw. Funkempfangsvorrichtung umfasst:
eine Einrichtung (23) zur Speicherung von Frequenzen von Funksendesignalen, die selektiv empfangen werden können, von Indexnamen, die den betreffenden Funksendesignalen zugeordnet sind, und von Schallfeld-Einstellinformationen entsprechend der betreffenden Vielzahl von Funksendesignalen, wobei die Vielzahl der Funksendesignale selektiv empfangbar ist,
eine Einrichtung (9, 12) zur Erzeugung eines internen Videosignals für die Abgabe an den Videosignalempfänger zur Anzeige zusammen mit einer Liste, welche die in der Einrichtung (123) zur Speicherung gespeicherten Frequenzen, Indexnamen und Schallfeld-Einstellinformationen umfasst, auf dem in dem Videosignalempfänger enthaltenen elektronischen Anzeigeschirm,
eine Steuereinrichtung (12, 13) für die Steuerung der Einrichtung (23) zur Speicherung und der Einrichtung (9, 12) zur Erzeugung eines internen Videosignals, wobei die Steuereinrichtung (12, 13) eine Vielzahl von Tasten (13) aufweist, die so angeordnet sind, dass ein Benutzer-eines der Vielzahl von Funksendesignalen aus der Liste auswählen kann, die auf dem elektronischen Anzeigeschirm angezeigt wird, und eine Einrichtung enthält, die dem Benutzer der Vorrichtung ermöglicht, die Schallfeld-Einstellinformation entsprechend dem ausgewählten einen Signal der Vielzahl von Funksendesignalen zu modifizieren, indem auf dem elektronischen Anzeigeschirm ein Schallfeld-Einstellfenster angezeigt wird, welches eine Vielzahl von durch den Benutzer auswählbaren Schallfeldeinstellungen enthält, derart, dass der Benutzer durch die Verwendung der Vielzahl von Tasten (13) eine gewünschte Schallfeldeinstellung für das ausgewählte Signal aus der Vielzahl von Funksendesignalen und zur Speicherung der gewünschten Schallfeldeinstellung in der Einrichtung (23) zur Speicherung auswählen kann,
und wobei die Einrichtung (4) zur Anwendung der gewünschten Feldeinstellung zur Anwendung der gespeicherten gewünschten Schallfeldeinstellung auf das genannte eine Signal aus der Vielzahl von Funksendesignalen dient, wenn das betreffende Funksendesignal selektiv empfangen wird.

2. Rundfunk- bzw. Funkempfangsvorrichtung nach Anspruch 1, wobei die Steuereinrichtung (12, 13) ferner eine Indexnamen-Änderungseinrichtung aufweist, die es dem Benutzer der Vorrichtung ermöglicht, den dem ausgewählten einen Signal aus der Vielzahl von Funksendesignalen entsprechenden Indexnamen dadurch zu modifizieren, dass auf dem elektronischen Anzeigeschirm ein Indexnamen-Änderungsfenster angezeigt wird, welches eine Vielzahl von alphanumerischen Zeichen enthält, derart, dass der Benutzer unter Verwendung der Vielzahl von Tasten einen gewünschten Indexnamen für das ausgewählte eine Funksendesignal aus der Vielzahl von Funksendesignalen und zur Speicherung des gewünschten Indexnamens in der Einrichtung (23) zur Speicherung auswählen kann.

3. Auswahlverfahren zur Anwendung in einer Rundfunk- bzw. Funkempfangsvorrichtung zum Empfang einer Vielzahl von Funksendesignalen und zur Verarbeitung eines empfangenen externen Videosignals für die Abgabe an einen und Anzeige auf einem elektronischen Anzeigeschirm, der in einem Videosignalempfänger enthalten ist, wobei die betreffende Rundfunk- bzw. Funkempfangsvorrichtung das Verfahren mit den Schritten umfasst:
Mittel zur Speicherung (23) von Frequenzen von Funksendesignalen, die selektiv empfangen werden können, von Indexnamen, die den betreffenden Funksendesignalen zugeordnet sind, und von Schallfeld-Einstellinformationen entsprechend der betreffenden Vielzahl von Funksendesignalen,
Anwenden einer gewünschten Schallfeldeinstellung auf eines der Vielzahl von Funksendesignalen ermöglichen für den Anwender der Vorrichtung die Schallfeld-Einstellinformation zu modifizieren,
wobei der Schritt dem Anwender der Vorrichtung eine Modifizierung zu ermöglichen umfasst:
die Erzeugung (9, 12) eines internen Videosignals zur Abgabe an den Videosignalempfänger für die Anzeige zusammen mit einer Liste, welche die in der Einrichtung zur Speicherung (23) gespeicherten Frequenzen, Indexnamen und Schallfeld-Einstellinformationen enthält, auf dem in dem Videosignalempfänger enthaltenen elektronischen Anzeigeschirm, ermöglichen für den Anwender ein Funksendesignal von der Vielzahl von Funksendesignalen aus der auf dem elektronischen Anzeigeschirm angezeigten Liste auszuwählen,
ermöglichen für den Anwender der Vorrichtung die dem ausgewählten einen Funksendesignal aus der Vielzahl von Funksendesignalen entsprechende Schallfeld-Einstellinformation dadurch zu modifizieren, dass auf dem elektronischen Anzeigeschirm ein Schallfeld-Einstellfenster angezeigt wird, welches eine Vielzahl von durch den Benutzer auswählbaren Schallfeldeinstelllungen enthält, derart, dass der Benutzer durch Verwendung der Vielzahl von Tasten eine gewünschte Schallfeldeinstellung für das ausgewählte eine Funksendesignal aus der Vielzahl von Funksendesignalen auswählen kann,
Speichern (23) der gewünschten Schallfeldeinstellung entsprechend dem genannten ausgewählten einen Funksendesignal aus der Vielzahl von Funksendesignalen
und Anwenden (4) der gewünschten Schallfeldeinstellung auf das betreffende eine Funksendesignal aus der Vielzahl von Funksendesignalen, wenn das betreffende Funksendesignal selektiv empfangen wird.

4. Auswahlverfahren nach Anspruch 3, ferner umfassend den Schritt, der es dem Benutzer der Vorrichtung ermöglicht, den dem ausgewählten Funksendesignal aus der Vielzahl von Funksendesignalen entsprechenden Indexnamen dadurch zu modifizieren, dass auf dem elektronischen Anzeigeschirm ein Indexnamen-Änderungsfenster angezeigt wird, welches eine Vielzahl von alphanumerischen Zeichen enthält, derart, dass der Benutzer einen gewünschten Indexnamen für das ausgewählte eine Funksendesignal aus der Vielzahl von Funksendesignalen auswählen kann.

## Revendications

1. Radiorécepteur en vue de recevoir une pluralité de signaux radiodiffusés et de traiter un signal vidéo extérieur reçu pour une délivrance et pour un affichage sur un écran d'affichage électronique compris dans un récepteur de signaux vidéo comprenant :
des moyens (4) afin d'appliquer un réglage de domaine sonore désiré à l'un de la pluralité de signaux radiodiffusés ; et
des moyens de commande afin de permettre à l'utilisateur de l'appareil de modifier l'information de réglage de domaine sonore ; dans lequel le radiorécepteur comporte :
des moyens (23) pour mémoriser des fréquences de signaux radiodiffusés qui peuvent être sélectivement reçus, des noms d'index associés aux signaux radiodiffusés respectifs, et une information de réglage de domaine sonore correspondant respectivement à la pluralité de signaux radiodiffusés, dans lequel la pluralité de signaux radiodiffusés peut être sélectivement reçue ;
des moyens (9, 12) pour produire un signal vidéo intérieur en vue d'une délivrance au récepteur de signaux vidéo pour afficher collectivement une liste comprenant les fréquences, les noms d'index, et l'information de réglage de domaine sonore mémorisée dans les moyens (23) pour une mise en mémoire sur l'écran d'affichage électronique compris dans le récepteur de signaux vidéo ;
des moyens de commande (12, 13) pour commander les moyens de mémoire (23) et les moyens (9, 12) pour produire un signal vidéo intérieur, dans lequel les moyens de commande (12, 13) comprennent une pluralité de touches (13) disposées de sorte qu'un utilisateur peut choisir l'un de la pluralité de signaux radiodiffusés depuis la liste affichée sur l'écran d'affichage électronique et comprennent des moyens permettant à l'utilisateur de l'appareil de modifier l'information de réglage de domaine sonore correspondant à un signal choisi parmi la pluralité de signaux radiodiffusés en affichant sur l'écran d'affichage électronique une fenêtre de réglage de domaine sonore comprenant une pluralité de réglages de domaines sonores pouvant être choisis de sorte que l'utilisateur peut choisir, en utilisant la pluralité de touches (13), un réglage de domaine sonore désiré pour le signal choisi parmi la pluralité de signaux radiodiffusés, et pour mémoriser le réglage de domaine sonore désiré dans les moyens de mémoire (23) ; et dans lequel
les moyens (4) d'application du réglage de domaine désiré ont pour but d'appliquer le réglage de domaine sonore désiré mémorisé audit signal parmi la pluralité de signaux radiodiffusés lorsque ledit signal radiodiffusé est sélectivement reçu.

2. Radiorécepteur selon la revendication 1, dans lequel les moyens de commande (12, 13) comportent en outre des moyens de changement de nom d'index afin de permettre à l'utilisateur de l'appareil de modifier le nom d'index correspondant au signal choisi de la pluralité de signaux radiodiffusés en affichant sur l'écran d'affichage électronique une fenêtre de changement de nom d'index comprenant une pluralité de caractères alphanumériques de sorte que l'utilisateur peut choisir en utilisant la pluralité de touches un nom d'index désiré pour le signal choisi de la pluralité de signaux radiodiffusés, et pour mémoriser le nom d'index désiré dans les moyens de mémorisation (23).

3. Procédé de sélection en vue d'une utilisation dans un radiorécepteur pour recevoir une pluralité de signaux radiodiffusés et pour traiter un signal vidéo extérieur reçu pour une délivrance et pour un affichage sur un écran d'affichage électronique compris dans un récepteur de signaux vidéo, ledit radiorécepteur comprenant des moyens pour mémoriser (23) des fréquences de signaux radiodiffusés pouvant être sélectivement reçus, des noms d'index associés aux signaux radiodiffusés respectifs et une information de réglage de domaine sonore correspondant respectivement à la pluralité de signaux radiodiffusés, le procédé comprenant les étapes consistant à :
appliquer un réglage de domaine sonore désiré à l'un de la pluralité de signaux radiodiffusés ; et
permettre à l'utilisateur de l'appareil de modifier l'information de réglage de domaine sonore ; dans lequel ladite étape autorisant l'utilisateur de l'appareil à effectuer une modification comprend :
produire (9, 12) un signal vidéo interne pour une délivrance au récepteur de signaux vidéo afin d'afficher collectivement une liste comprenant les fréquences, les noms d'index, et l'information de réglage de domaine sonore mémorisée dans les moyens de mémorisation (23) sur l'écran d'affichage électronique compris dans le récepteur de signaux vidéo ;
permettre à l'utilisateur de choisir l'un de la pluralité de signaux radiodiffusés parmi la liste affichée sur l'écran d'affichage électronique ;
permettre à l'utilisateur de l'appareil de modifier l'information de réglage de domaine sonore correspondant au signal choisi de la pluralité de signaux radiodiffusés en affichant sur l'écran d'affichage électronique une fenêtre de réglage de domaine sonore comprenant une pluralité de réglages de domaine sonore pouvant être choisis par l'utilisateur de sorte que l'utilisateur peut choisir, en utilisant la pluralité de touches, un réglage de domaine sonore désiré pour le signal choisi de la pluralité de signaux radiodiffusés ;
mémoriser (23) le réglage de domaine sonore désiré pour correspondre audit signal choisi de ladite pluralité de signaux radiodiffusés ; et
appliquer (4) le réglage de domaine sonore désiré audit signal de la pluralité de signaux radiodiffusés lorsque ledit signal radiodiffusé est sélectivement reçu.

4. Procédé de sélection selon la revendication 3, comprenant en outre l'étape permettant à l'utilisateur de l'appareil de modifier le nom d'index correspondant au signal choisi de la pluralité de signaux radiodiffusés en affichant sur l'écran d'affichage électronique une fenêtre de changement de nom d'index comprenant une pluralité de caractères alphanumériques de sorte que l'utilisateur peut sélectionner un nom d'index désiré pour le signal choisi de la pluralité de signaux radiodiffusés.
